(19) **Europäisches Patentamt / European Patent Office / Office européen des brevets**

(11) **EP 3 267 616 B1**

(12) **EUROPEAN PATENT SPECIFICATION**

(45) Date of publication and mention of the grant of the patent:
**02.10.2019 Bulletin 2019/40**

(51) Int Cl.:
**H04L 5/00** *(2006.01)* **H04L 5/14** *(2006.01)*
**H04L 27/26** *(2006.01)* **H04B 17/12** *(2015.01)*
**H04B 17/309** *(2015.01)*

(21) Application number: **17178657.7**

(22) Date of filing: **29.06.2017**

(54) **WIRELESS COMMUNICATION SYSTEM, BASE STATION, AND TERMINAL**

DRAHTLOSKOMMUNIKATIONSSYSTEM, BASISSTATION UND ENDGERÄT

SYSTÈME DE COMMUNICATION SANS FIL, STATION DE BASE ET TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2016 JP 2016134377**

(43) Date of publication of application:
**10.01.2018 Bulletin 2018/02**

(73) Proprietor: **Fujitsu Limited**
**Kawasaki-shi, Kanagawa 211-8588 (JP)**

(72) Inventors:
• **JITSUKAWA, Daisuke**
  **Kawasaki-shi**
  **Kanagawa 211-8588 (JP)**

• **DATEKI, Takashi**
  **Kawasaki-shi**
  **Kanagawa 211-8588 (JP)**
• **SEKI, Hiroyuki**
  **Kawasaki-shi**
  **Kanagawa 211-8588 (JP)**

(74) Representative: **Haseltine Lake Kempner LLP**
**Redcliff Quay**
**120 Redcliff Street**
**Bristol BS1 6HU (GB)**

(56) References cited:
**EP-A1- 2 416 507    WO-A1-2010/147515**
**US-A1- 2006 009 162    US-A1- 2013 286 902**
**US-A1- 2014 198 773**

**Description**

FIELD

The present disclosure relates to a wireless communication system, a base station, and a terminal.

BACKGROUND

In a wireless communication system, a time-division duplex (TDD) under the same frequency may be applied to wireless communications between a base station and a terminal. In the TDD, a guard period (GP) may be set by the base station to enable a switching from downlink (DL) communication to uplink (UL) communication.

Listed Related Art Document(s)

Patent Document 1: JP 2013-074486 A
Patent Document 2: WO 2015/108007 A
Patent Document 3: JP 2010-041269 A
Patent Document 4: JP 2006-512807 W

Non-Patent Document 1: 3GPP RI-094641, "Performance study on Tx/Rx mismatch in LTE TDD Dual-layer beamforming", 3GPP TSG-RAN WG1 Meeting #59, Nove mber 9-13, 2009
US 2013/286902 A1 describes adaptation of different special subframe configurations for certain subframes based on different communication environment characteristics experienced on the special subframes.
EP 2 416 507 A1 describes a method for antenna calibration, wherein the sub-carrier frequency points of the transmitting antenna are grouped by the transmitting end, and the frequency domain calibration pilot signal of said transmitting antenna is determined according to the groups.
WO 2010/147515 A1 describes a method for antenna calibration in a communication system having a bandwidth divided into multiple frequency intervals with multiple communication units.
US 2006/009162 A1 describes transmitting and receiving compensation coefficients of antenna elements relative to a calibration antenna element being obtained in the pre-calibration of a smart antenna.
US 2014/198773 A1 describes A user equipment (UE) for special subframe configuration for carrier aggregation.
For example, it is assumed that the base station transmits a certain predetermined signal in the GP. An example of the predetermined signal transmitted in the GP may be some kind of test signal such as a calibration signal. The predetermined signal may be considered as "a signal which is not directed for the terminal".
In this case, depending on a period during which the base station tries to transmit the predetermined signal, the GP may become insufficient. When a GP with a time length matching the period during which the base station tries to transmit the predetermined signal is applied, wireless resources available for terminals are reduced, and the utilization efficiency of the wireless resources may decrease.

SUMMARY

In one aspect, one of the objects of the techniques described herein is to achieve compatibility between a transmission of the predetermined signal by the base station and a suppression of reduction in the utilization efficiency of the wireless resources in the wireless communication system of TDD.
In one aspect of the invention, there is provided a base station according to claim 1.
As one aspect, it is possible to achieve the compatibility between the transmission of the predetermined signal by the base station and the suppression of reduction in the utilization efficiency of the wireless resources in the wireless communication system of TDD.

BRIEF DESCRIPTION OF DRAWINGS

FIG. 1 is a diagram illustrating an example of a wireless communication system;
FIG. 2 is a schematic diagram illustrating channel estimation in TDD;
FIG. 3 is a diagram illustrating an influence of a wireless (RF) transceiver circuit on the channel estimated value;

FIG. 4 is a schematic diagram illustrating a system calibration

FIG. 5 is a schematic diagram illustrating a self-calibration in a base station;

FIG. 6 is a schematic diagram illustrating an example in which calibration signals are transmitted and received among a plurality of antennas provided in a base station;

FIG. 7 is a schematic diagram illustrating an example in which resources are consumed for transmission and reception of a calibration signal;

FIG. 8 is a diagram illustrating an example of an uplink-downlink (UL-DL) configuration;

FIG. 9 is a diagram illustrating an example of a special subframe (SS) configuration;

FIG. 10 is a diagram illustrating an example in which a wireless resource for a calibration signal is set in a guard period of SS;

FIG. 11 is a block diagram illustrating a configuration example of a base station;

FIG. 12 is a block diagram illustrating a configuration example of a terminal;

FIG. 13 is a sequence diagram illustrating an operation example of the wireless communication system;

FIG. 14 is a flowchart illustrating an operation example of the base station; and

FIG. 15 is a flowchart illustrating an operation example of the terminal.

DESCRIPTION

Hereinafter, specific examples will be described with reference to the drawings. However, the specific examples described below are not intended to exclude an application of various modifications or techniques which are not explicitly described below. Further, various exemplary aspects described below may be appropriately combined and carried out. Elements or components assigned the same reference numeral in the drawings used for the following examples will represent identical or similar elements or components unless otherwise specified.

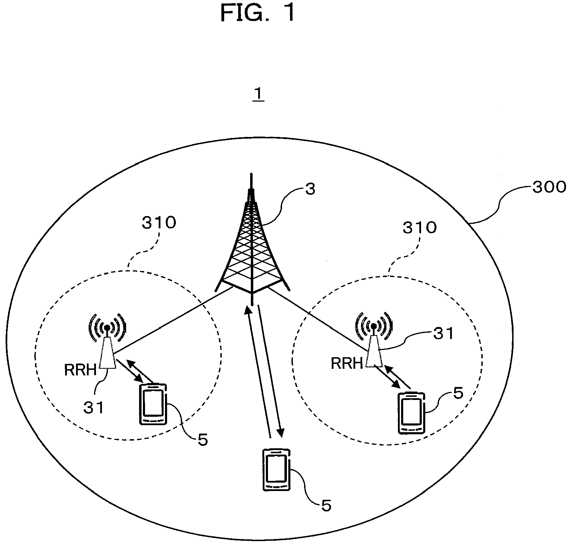

FIG. 1 is a diagram illustrating an example of a wireless communication system. The wireless communication system 1 illustrated in FIG. 1 may include, for example, one or more base stations 3 and one or more terminals 5. The base station 3 may be connected to a core network which is not illustrated.

The base station 3 forms or provides a wireless area 300 available to communicate with the terminal 5. The "wireless area" may also be referred to as "cell", "coverage area", "communication area", or "service area".

The base station 3 may be "eNB" compliant to the long term evolution (LTE) of 3rd generation partnership project (3GPP) or the LTE-Advanced (hereinafter collectively referred to as "LTE"). The "eNB" is an abbreviation for "evolved Node B".

The "cell" formed or provided by the base station 3 may be divided into "sector cells". The term of "cell" may mean not only an individual geographical region where the base station 3 provides a wireless communication service but also all or a part of communication function used or managed by the base station 3 to communicate with the terminal 5 in the individual geographical region.

The cell formed or provided by the eNB3 may be referred to as "macrocell" or "large cell". The eNB3 that forms the macrocell 300 may be referred to as "macro base station", "macro eNB", or "MeNB", for descriptive purposes. One or a plurality of small cells 310 may be disposed (overlaid) with respect to the macrocell 300.

The small cell 310 is an example of a wireless area with a range (coverage), in which communication is available, smaller than that of the macrocell 300. The small cell 310 may be referred to differently depending on a size of coverage area. For example, the small cell may also be referred to as "femto cell", "pico cell", "micro cell", "nano cell", "metro cell", or "home cell".

The small cell 310 may also be formed or provided by a wireless device 31 disposed separately from a base station main unit The wireless device 31 disposed separately from the base station main unit may be referred to as a remote radio equipment (RRE), or a remote radio head (RRH).

The RRH 31 may be considered as an element of the base station 3, or may be considered as corresponding to another base station 3 different from the base station main unit that provides the macrocell 300. Further, the base station 3 may correspond to a relay device that relays communication for the terminal 5. The relay device may be a "Relay Node (RN)" compliant to LTE.

When two or more base stations 3 are provided in the wireless communication system 1, the base stations 3 may be communicatively connected with each other by an X2 interface, for example. The X2 interface is an example of an interface between base stations, and may be any one of a wired interface and a wireless interface.

The terminal 5 is available to perform wireless communications in one or both of the macrocell 300 and the small cell 310. The "terminal" may also be referred to as "wireless device", "wireless apparatus", or "terminal device".

The terminal 5 may be an immobile terminal or a mobile terminal (may also be referred to as a "mobile station"). As a non-limiting example, the terminal 5 may be a movable UE such as a mobile phone, a smart phone, or a tablet device. The "UE" is an abbreviation of "User Equipment".

The eNB3 may control a setting of wireless resources used for wireless communications with the UE5. The control of the setting of wireless resources may also be referred to as "allocation control of the wireless resources". The allocation control of wireless resources (hereinafter, sometimes simply referred to as "resources") may be referred to as a "scheduling".

The scheduling may be performed individually for downlink (DL) communication and for uplink (UL) communication.

The wireless resources may be distinguished in two dimensions of frequency domain and time domain, or may be distinguished in three dimensions of frequency domain, time domain, and power domain (or code domain).

The eNB3 may schedule the wireless resources available for communications with the terminal 5 in units divided in two or three dimensions. For example, the minimum unit of scheduling in LTE may be referred to as resource block (RB).

The RB corresponds to one block obtained by dividing the resources available for the wireless communication between the eNB3 and the UE5 into units of slots in the time domain and a plurality of subcarriers neighboring in the frequency domain.

For example, the RB in LTE is represented by 2 slots * 12 subcarriers. One slot is 0.5 ms, and one subframe includes 2 slots (2 * 0.5 ms = 1 ms). One radio frame includes 10 subframes (10 * 1 ms = 10 ms). In LTE, a unit of 1 slot * 12 subcarriers may be referred to as a PRB (Physical Resource Block), and two PRBs within one subframe may be referred to as a "PRB pair".

Any one of the time-division duplex (TDD) and the frequency-division duplex (FDD) may be applied to the wireless communication between the base station 3 and the terminal 5.

In TDD, DL communication and UL communication are performed at different timings by using one frequency (or one frequency band, the same applies hereinafter).

For example, the base station 3 schedules different timings for DL communication and UL communication in one frequency (or frequency band) for the terminal 5. Therefore, the base station 3 and the terminal 5 perform transmission and reception at different timings in one frequency.

Meanwhile, in FDD, DL communication and UL communication are performed by using different frequencies (or frequency bands, the same applies hereinafter). For example, the base station 3 may schedule different frequencies for DL communication and UL communication regardless of a timing of communication. Therefore, the base station 3 and the terminal 5 are available to perform reception at a frequency different from a transmission frequency while performing transmission.

(DL Channel Estimation in TDD)

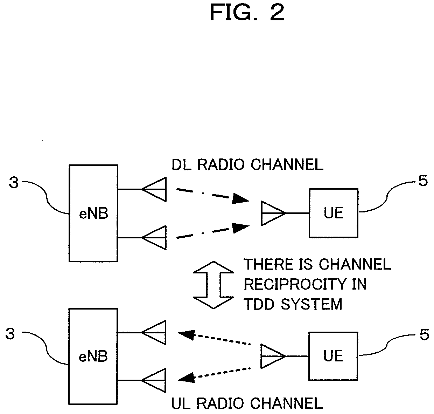

In TDD, as schematically illustrated in FIG. 2, since there is a reciprocity between the DL and UL radio channels between the base station 3 and the terminal 5, the characteristics of DL and UL radio channels using the same frequency may be treated as being the same. The characteristics of the radio channel may be abbreviated as "channel characteristics", for descriptive purposes.

For example, in the eNB3, UL channel characteristics estimated from a UL reference signal (RS) received from the UE5 may be treated as being equivalent to DL channel characteristics. In other words, the eNB3 is available to get the DL channel characteristics without receiving a report (feedback) of information indicative of the DL channel characteristics estimated by the UE5 from a DL RS, for example.

The "reference signal" is an example of a known signal between the eNB3 and the UE5, and may also be referred to as a "pilot signal". Information indicative of the estimated channel characteristics may also be referred to as a "channel estimated value".

The eNB3 is available to determine, for example, a precoding method and a transmission beamforming method used for DL data transmission in TDD by using a DL channel estimated value. For example, the eNB3 is available to control a weighting of a plurality of transmission data signal streams based on the DL channel estimated value.

Further, for example, since a report of a PMI from the UE5 to the eNB3 can be eliminated, it is possible to reduce an overhead of an UL control signal involved in the report. The "PMI" is an abbreviation of "precoding matrix indicator".

(Influence of RF Transceiver Circuit on Channel Estimated Value)

In TDD, as for the radio channel in the air, the channel characteristics may be treated as being reciprocal between the UL and the DL as described above. However, in practice, the channel characteristics estimated by the eNB3 and the UE5 may differ depending on the difference in the response characteristics of the transceiver circuits of the eNB3 and the UE5.

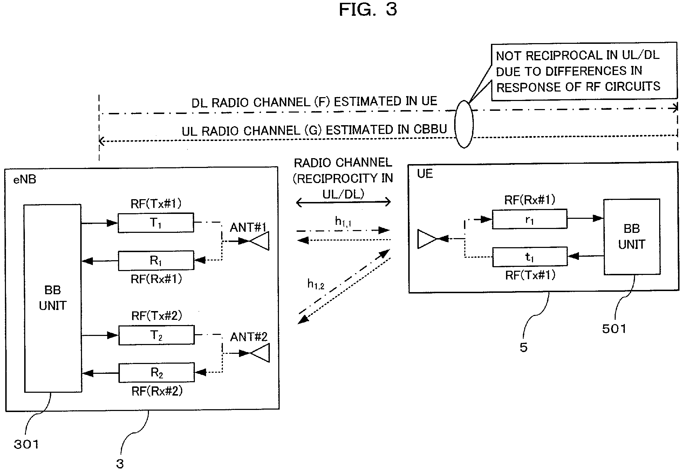

For example, as schematically illustrated in FIG. 3, it is assumed a model in which two antennas (ANT) #1 and #2 are provided for the eNB3 and one antenna (ANT) #1 is provided for the UE5.

The eNB3 is provided with, for example, a first wireless (RF) transmission circuit Tx#1 and an RF reception circuit Rx#1 for the first antenna #1, and is provided with a second RF transmission circuit Tx#2 and an RF reception circuit Rx#2 for the second antenna #2.

Meanwhile, the UE5 is provided with one RF reception circuit Rx#1 and one RF transmission circuit Tx#1 for one antenna #1.

In FIG. 3, any one of the BB unit 301 provided in the eNB3 and the BB unit 501 provided in the UE5 is a unit that performs baseband (BB) signal processing on transmission and reception signals.

In each of the eNB3 and the UE5, the RF transmission circuit and the RF reception circuit may be separate circuits, or may be integrated into a single circuit. In the following description, regardless of whether separate or integrated, a pair of the RF transmission circuit and the RF reception circuit may be collectively referred to as "RF transceiver circuit" or "RF circuit", for descriptive purposes.

Here, transfer functions of the first RF transmission circuit Tx#1 and the RF reception circuit Rx#1 in the eNB3 are respectively represented by $T_1$ and $R_1$, and transfer functions of the second RF transmission circuit Tx#2 and the RF reception circuit Rx#2 in the eNB3 are respectively represented by $T_2$ and $R_2$.

Further, transfer functions of the RF reception circuit Rx#1 and the RF transmission circuit Tx#1 in the UE5 are represented by $r_1$ and $t_1$, respectively. The above transfer functions in the eNB3 and the UE5 may be referred to as "RF circuit characteristics", for descriptive purposes.

Furthermore, the channel matrix between the first antenna #1 of the eNB3 and the antenna #1 of the UE5 is represented by $h_{1,1}$, and the channel matrix between the second antenna #2 of the eNB3 and the antenna #1 of the UE5 is represented by $h_{1,2}$.

In this case, DL channel characteristics ($F_{1,1}$) estimated by the UE5 based on the DL RS transmitted by the eNB3 from the first antenna #1 can be expressed by the following mathematical formula 1.

[Mathematical Formula 1]

$$F_{1,1} = T_1 \cdot h_{1,1} \cdot r_1$$

Meanwhile, UL channel characteristics ($G_{1,1}$) estimated by the eNB3 based on the UL RS transmitted by the UE5 from the antenna #1 can be expressed by the following mathematical formula 2.

[Mathematical Formula 2]

$$G_{1,1} = t_1 \cdot h_{1,1} \cdot R_1$$

Therefore, when $T_1 \neq t_1$ or $r_1 \neq R_1$ is satisfied, since $G_{1,1} \neq F_{1,1}$ is satisfied, by treating the UL channel characteristics $G_{1,1}$ estimated by the eNB3 as the same as the DL channel characteristics $F_{1,1}$ estimated by the UE5, the DL communication characteristics may be possibly degraded.

For example, since the precoding transmission or the transmission beamforming for the DL based on the UL channel characteristics estimated by the eNB3 becomes non-optimal, DL throughput characteristics may be possibly degraded. The same applies to the DL transmission through the second antenna #2 of the eNB3.

There is a tendency that the difference between the UL channel characteristics estimated by the eNB3 and the DL channel characteristics estimated by the UE5 is more influenced by the difference between the RF circuit characteristics for transmission and reception in the eNB3 than the difference between the RF circuit characteristics for transmission and reception in the UE5.

For example, the following cases will be discussed.

When the MU-MIMO transmission between one base station and a plurality of terminals is performed, an influence caused by the transceiver circuit characteristics in the base station and the terminal will be considered. The "MU-MIMO" is an abbreviation of "multi user-multiple-input and multiple-output".

When the number of antennas of the base station is represented by N and the total number of antennas of the plurality of terminals is represented by M, the MIMO channel formed between them is expressed by an (M × N) channel matrix as set forth in the following mathematical formula 3.

[Mathematical Formula 3]

$$H = \begin{bmatrix} h_{0,0} & \cdots & h_{0,N-1} \\ \vdots & \ddots & \vdots \\ h_{M-1,0} & \cdots & h_{M-1,N-1} \end{bmatrix}$$

A channel estimated result for the UL in the base station is expressed by a UL channel matrix G as set forth in the following mathematical formula 4. Here, $t_m$ and $r_m$ represent a transfer function of a transceiver circuit for the antenna #m at the terminal, and $T_n$ and $R_n$ represent a transfer function of a transceiver circuit for the antenna #n at the base station.

[Mathematical Formula 4]

$$G = \begin{bmatrix} t_0 \cdot h_{0,0} \cdot R_0 & \cdots & t_0 \cdot h_{0,N-1} \cdot R_{N-1} \\ \vdots & \ddots & \vdots \\ t_{M-1} \cdot h_{M-1,0} \cdot R_0 & \cdots & t_{M-1} \cdot h_{M-1,N-1} \cdot R_{N-1} \end{bmatrix}$$

Meanwhile, a channel estimated result for the DL in each of the terminals is expressed by a DL channel matrix F as set forth in the following mathematical formula 5. Here, B is a matrix representing a ratio of transceiver circuit responses for each antenna at the terminal, and A is a matrix representing a ratio of transceiver circuit responses for each antenna at the base station. The diag () represents a diagonal matrix.

[Mathematical Formula 5]

$$F = \begin{bmatrix} T_0 \cdot h_{0,0} \cdot r_0 & \cdots & T_{N-1} \cdot h_{0,N-1} \cdot r_0 \\ \vdots & \ddots & \vdots \\ T_0 \cdot h_{M-1,0} \cdot r_{M-1} & \cdots & T_{N-1} \cdot h_{M-1,N-1} \cdot r_{M-1} \end{bmatrix}$$

$$= \mathrm{diag}\left(\frac{r_0}{t_0}, \cdots, \frac{r_{M-1}}{t_{M-1}}\right) \begin{bmatrix} t_0 \cdot h_{0,0} \cdot R_0 & \cdots & t_0 \cdot h_{0,N-1} \cdot R_{N-1} \\ \vdots & \ddots & \vdots \\ t_{M-1} \cdot h_{M-1,0} \cdot R_0 & \cdots & t_{M-1} \cdot h_{M-1,N-1} \cdot R_{N-1} \end{bmatrix} \mathrm{diag}\left(\frac{T_0}{R_0}, \cdots, \frac{T_{N-1}}{R_{N-1}}\right)$$

$$= B \cdot G \cdot A$$

A ZF (Zero Forcing) transmission weight matrix W for the MU-MIMO transmission is expressed by the following mathematical formula 6 using the UL channel matrix G. The $G^H$ represents an adjoint matrix (or Hermitian transposed matrix) of the matrix G.

[Mathematical Formula 6]

$$W = G^H \cdot (G \cdot G^H)^{-1}$$

When ZF transmission weights are applied to M transmission symbols ($s_0$, ..., $s_{M-1}$) for a plurality of terminals to perform a spatial multiplex transmission by N base station antennas, M reception symbols ($y_0$, ..., $y_{M-1}$) received by the terminal are expressed by the following mathematical formula 7.

[Mathematical Formula 7]

$$\begin{bmatrix} y_0 \\ \vdots \\ y_{M-1} \end{bmatrix} = F \cdot W \begin{bmatrix} s_0 \\ \vdots \\ s_{M-1} \end{bmatrix} = (B \cdot G \cdot A) \cdot \{G^H \cdot (G \cdot G^H)^{-1}\} \begin{bmatrix} s_0 \\ \vdots \\ s_{M-1} \end{bmatrix}$$

When an equivalent channel (F·W) between the base station and the terminal is in a state represented by a diagonal matrix, the channel is orthogonal, and transmission symbols for a plurality of terminals are received without interfering with each other. To that end, the matrix A which is expressed by the following mathematical formula 8 and represents the ratio of the transceiver circuit response for each antenna at the base station has to be a constant multiple of the unit matrix.

[Mathematical Formula 8]

$$A = \mathrm{diag}(T_0/R_0, \cdots T_{N-1}/R_{N-1})$$

When the above conditions can be satisfied, the equivalent channel is orthogonal. Meanwhile, it can be considered that a state of the matrix B representing a ratio of the transceiver circuit response for each antenna at the terminal, which is expressed by the following mathematical formula 9, does not influence on an orthogonality of the equivalent channel as compared with a base station side.

[Mathematical Formula 9]

$$B = \mathrm{diag}(r_0/t_0, \cdots r_{M-1}/t_{M-1})$$

In order to avoid or suppress a deterioration of the DL communication characteristics as described above, it is preferred that the UL channel characteristics for each of the antennas #1 and #2 estimated in the eNB3 are corrected (may also be referred to as "calibrated"). The correction may be referred to as "RF circuit calibration", for descriptive purposes.

(RF Circuit Calibration)

The RF circuit calibrations can be classified into a "system calibration" and a "self calibration" depending on a signal used for calibration (may be referred to as "test signal" or "calibration signal"). The former "system calibration" may also be referred to as an "over-the-air calibration".
In any of the calibrations, it is preferable to transmit the test signal periodically or non-periodically to measure the RF circuit characteristics in order to perform correction following a temperature change or an aging of the RF transceiver circuit. The test signal is an example of a signal which is not directed for the terminal.

(System Calibration)

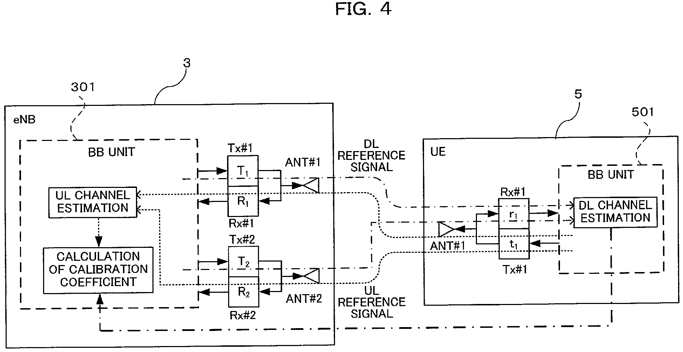

FIG. 4 schematically illustrates an operation example of the system calibration. As indicated by dotted arrows in FIG. 4, the eNB3 and the UE5 mutually transmit and receive test signals for calibration alternately, for example.
For example, the eNB3 may transmit a DL RS as an example of a test signal through the first RF transmission circuit Tx#1 and the antenna #1. The DL RS may be generated in the BB unit 301 of the eNB3, for example.
Similarly, the eNB3 may transmit an DL RS as an example of a test signal through the second RF transmission circuit Tx#2 and the antenna #2.
The DL RS transmitted by each of the antennas #1 and #2 of the eNB3 is received by the RF reception circuit Rx#1 through the antenna #1 of the UE5 and input into the BB unit 501.
The BB unit 501 may obtain DL channel estimated values from the received DL RSs. Each of the obtained DL channel estimated values may be transmitted (in other words, fed back) to the eNB3. The feedback to the eNB3 may be performed, for example, through the RF transmission circuit Tx#1 and the antenna #1 of the UE5.
Further, the UE5 may transmit a UL RS as an example of the test signal through the RF transmission circuit Tx#1 and the antenna #1. The UL RS may be transmitted at the same frequency as the UL RS at a timing different from the timing at which the DL RS is transmitted. The UL RS may be generated in the BB unit 501 of the UE5, for example.
The UL RSs are received by the RF reception circuits Rx#1 and Rx#2 through the respective antennas #1 and #2 of the eNB3 and input into the BB unit 301.
The BB unit 301 may obtain UL channel estimated values from the respective UL RSs received in the RF reception circuits Rx#1 and Rx#2. Then, the BB unit 301 may calculate a calibration coefficient by comparing the obtained UL channel estimated value with the DL channel estimated value fed back from the UE5.
By correcting the channel characteristics using the calculated calibration coefficient, it is possible to fix the responses of the RF transceiver circuits for all antennas #1 and #2 to the same or a constant relationship.
For example, in the eNB3, it is possible to make a relative relationship of the response characteristics between the RF transmission circuit and the RF reception circuit to converge into a constant phase difference (φ) for any of the antennas #1 and #2.

(Self-Calibration)

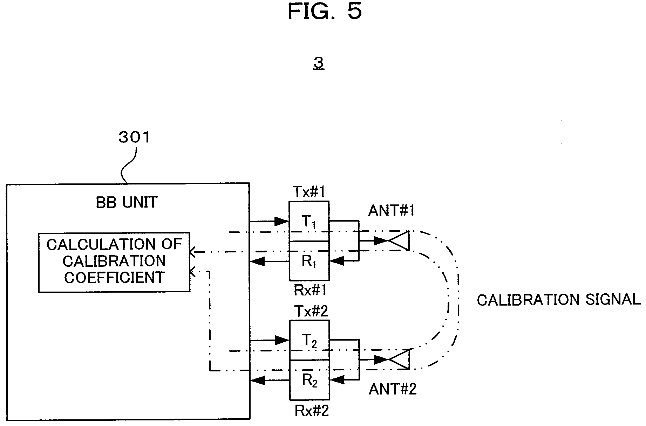

FIG. 5 schematically illustrates an operation example of self-calibration in the eNB3.

In the self-calibration, the eNB3 alternately transmits and receives the test signal between the antennas #1 and #2, and compares the respective received test signals, for example, in the BB unit 301, whereby the calibration coefficient can be calculated.

The processing of alternately transmitting and receiving test signals between the antennas #1 and #2 may be achieved by transmitting and receiving test signals with weak radio waves alternately between the antennas #1 and #2, for example, as illustrated by a two-dot chain line in FIG. 5.

Alternatively, the processing of alternately transmitting and receiving test signals between the antennas #1 and #2 may be achieved by alternately causing the test signal transmitted from one of the antennas #1 and #2 to branch with, for example, a coupler so as to input into the other of the antennas #1 and #2.

By correcting the channel characteristics by using the calculated calibration coefficient, it is possible to fix the response of the RF transceiver circuit for all antennas #1 and #2 to the same or a constant relationship.

For example, in the eNB3, it is possible to make a relative relationship of the response characteristics between the RF transmission circuit and the RF reception circuit to converge into a constant phase difference (φ) for any of the antennas #1 and #2.

(Transmission of Calibration Signal in Guard Period)

In a radio frame of TDD, a guard period (GP) may be provided in order to avoid an overlap (may also be referred to as a "collision" or an "interference") between a DL signal and a UL signal. The GP may be set in a subframe of the radio frame, which is referred to as a special subframe (SS) in LTE.

The GP set in the SS may have a variable length. For example, A GP having a time length depending on a propagation delay of a signal between the eNB3 and the UE5 or a time taken for switching between a transmission processing and a reception processing in the eNB3 or the UE5 may be set in the SS. Since the propagation delay of the signal between the eNB3 and the UE5 depends on a cell radius, the GP depending on the propagation delay may be considered as a GP depending on the cell radius.

Here, when transmission and reception of calibration (CAL) signals for the RF circuit calibration are performed in the GP, resources are not consumed for the UL signal and the DL signal used for the RF circuit calibration, and therefore, it can be considered to be advantageous from the viewpoint of utilization efficiency of resources.

However, for example, as the number of antennas increases due to an increase in size of the antenna system used for precoding transmission and beamforming transmission increases, the number of CAL signals to be transmitted and received in the GP also increases. In other words, as the number of antennas of the eNB3 increases, the number of time-division multiplex of the CAL signals in the GP increases.

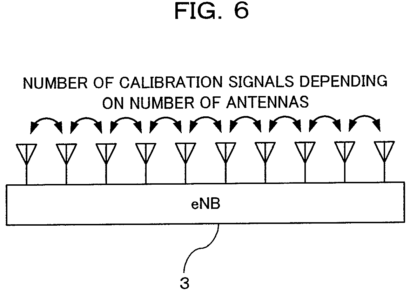

For example, as schematically illustrated in FIG. 6, when the number of antennas of the eNB3 is N (N is an integer of 2 or more), the CAL signals are bi-directionally transmitted for the (N-1) sets of antenna pairs.

Therefore, for example, as the number of antennas N increases as in a large-scale antenna system, there is a possibility that transmissions and receptions of the CAL signals sufficient in number for the RF circuit calibration are not finished in the GP. In other words, the GP length may be insufficient for the number of CAL signals to be transmitted and received.

When the GP is lengthened depending on the number of CAL signals to be transmitted and received in order to avoid the insufficient GP length, resource amount available for transmission of a data signal decreases. Since the RF circuit calibration does not need to be performed frequently, when a resource for the data signals is consumed by temporal and intermittent transmission or reception of a CAL signal, throughput characteristics between the eNB3 and the UE5 may decrease.

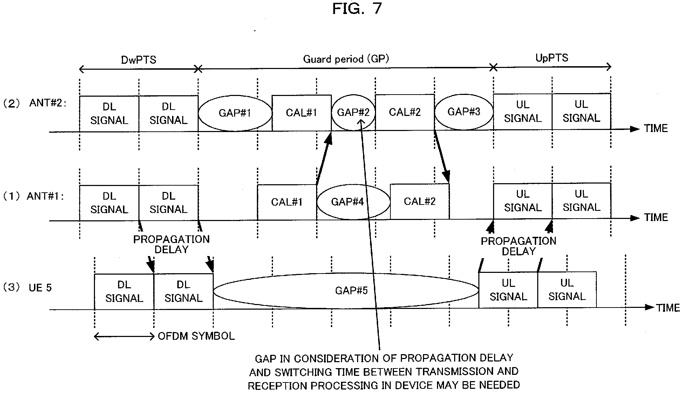

FIG. 7 schematically illsutrates an example in which the resources for the data signal are consumed by transmission and reception of the CAL signals. In FIG. 7, (1) and (2) respectively illustrate examples of signal transmission and reception timings for the antennas #1 and #2 of the eNB3, and (3) illustrates an example of signal transmission and reception timings of the UE5.

In FIG. 7, the horizontal axis is the time axis, and OFDM symbols of DL signal, GPs, and OFDM symbols of UL signal are illustrated in order from the left. The "OFDM" is an abbreviation of "orthogonal frequency division multiplexing".

In the OFDM symbols of the DL signal, the eNB3 may transmit DL data signals from one or both of the antennas #1 and #2 to the UE5. Meanwhile, in the OFDM symbols of the UL signal, the UE5 may transmit UL data signals.

Therefore, the number of OFDM symbols of the DL signal corresponds to a DL transmission period for the eNB3, and corresponds to a DL reception period for the UE5. Meanwhile, the number of OFDM symbols of the UL signal corresponds to a UL transmission period for the UE5, and corresponds to a UL reception period for the eNB3.

In the GP, the eNB3 may transmit and receive the CAL signals between the antennas #1 and #2. For example, the eNB3 may transmit a first CAL signal #1 from the antenna #1 to the antenna #2, and then transmit a second CAL signal #2 from the antenna #2 to the antenna #1.

Here, as illustrated in (2) of FIG. 7, in order to avoid collision at the antenna #2 between a DL data signal transmission and a reception of the CAL signal from the antenna #1, a gap (GAP) #1 may be set between an OFDM symbol of a DL signal and a reception period of a CAL signal #1. The "GAP" means a period during which any signals are not transmitted and received.

Further, in order to avoid collision at the antenna #2 between a reception of the CAL signal #1 and a transmission of the CAL signal #2, a GAP #2 may be set between a reception period of the CAL signal #1 and a transmission period of the CAL signal #2. The GAP #2 may be set in consideration of a time taken to switch between reception processing of the CAL signal #1 and transmission processing of the CAL signal #2.

Furthermore, in order to avoid collision at the antenna #2 between the transmission of the CAL signal #2 and a reception of UL data signal, the GAP #3 may also be set between the transmission period of the CAL signal #2 and an OFDM symbol of the UL signal.

Meanwhile, focusing on the antenna #1, as illustrated in (1) of FIG. 7, in order to avoid collision at the antenna #1 between a transmission of the CAL signal #1 and a reception of the CAL signal #2, a GAP #4 may be set between a transmission period of the CAL signal #1 and a reception period of the CAL signal #2. The GAP #4 may be set in consideration of a time taken to switch between transmission processing of the CAL signal #1 and reception processing of the CAL signal #2.

In such a way, when the GAPs #1 to #4 are set to transmit and receive CAL signals between antennas #1 and #2, as illustrated in (3) of FIG. 7, the UE 5 may experience a large GAP #5 depending on lengths of the GAPs #1 to #4 between a DL reception period and a UL transmission period.

For example, after the end of the DL reception period, even when the UE5 can advance a UL transmission timing by a time depending on a UL propagation delay, the UL transmission timing would be started, at the fastest, in the middle of the transmission and reception processing between the antennas #1 and #2 of the second CAL signal #2.

When there is no transmission and reception of the CAL signals #1 and #2, the UE5 would originally be available to start a UL data transmission after the end of the DL reception period, for example, during a period in which the CAL signal #1 is transmitted from the antenna #1 to the antenna #2.

Thus, when the CAL signal is transmitted and received between the antennas #1 and #2 of the eNB3 during the GP, time resources which would be originally available for a UL transmission by the UE5 may be wasted depending on the GAP length set for transmission and reception of the CAL signal.

In view of the above, the present example achieves that a resource amount wasted by the CAL signals even when the number of antennas N that transmit and receive the CAL signals is large at the eNB3.

In other words, the present example provides a way to achieve the RF circuit calibration for a large-scale antenna system while minimizing the resource amount consumed by the CAL signals.

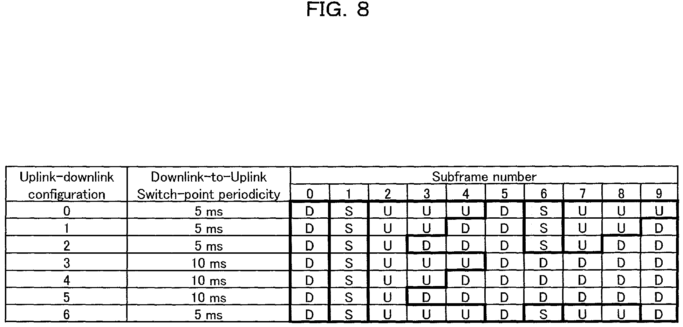

For example, a TDD frame format of LTE is focused. FIG. 8 illustrates an example of the UL-DL configuration defined for the TDD frame format.

As illustrated in FIG. 8, the UL-DL configuration is defined in seven types indicated by configuration numbers "0" to "6". With the seven types of the UL-DL configuration, it is available to vary a ratio in the subframes for the DL and the UL to be set in the radio frame. In FIG. 8, a DL subframe is denoted by "D" and a UL subframe is denoted by "U".

In the TDD frame format of LTE, one radio frame is constituted by ten subframes with subframe numbers 0 to 9 (1 ms), and has a time length of 10 * 1 ms = 10 ms. One subframe is constituted by two slots (0.5 ms).

One slot may be constituted by 6 or 7 symbols. The symbol may be an OFDM symbol, for example. When a normal cyclic prefix (CP) is applied, 7 OFDM symbols are included in one slot. Meanwhile, when an extended CP having a longer time length than the normal CP is applied, 6 OFDM symbols are included in one slot.

In the TDD frame, as illustrated in FIG. 8, a special subframe (SS) represented by "S" may be set in order to facilitate switching from the DL subframe to the UL subframe. One SS may include 14 symbols, for example.

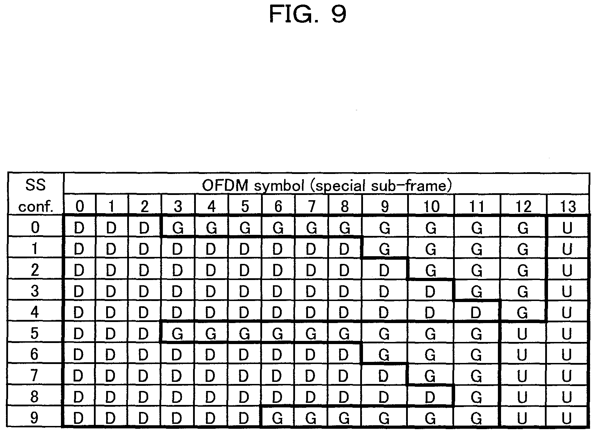

FIG. 9 illustrates an example of an SS configuration. As illustrated in FIG. 9, the SS configuration is defined in ten types indicated by configuration numbers "0" to "9".

In the SS, three fields of a downlink pilot time slot (DwPTS), a GP, and an uplink pilot time slot (UpPTS) are defined in units of symbols, for example. In FIG. 9, "D" denotes "DwPTS", "G" denotes "GP", and "U" denotes "UpPTS".

The "DwPTS" indicates a time slot for a DL communication in the SS, and the "UpPTS" indicates a time slot for a UL communication in the SS. Depending on the types of the SS configuration, the DwPTS may include 3 to 12 symbols, the GP may include 2 to 10 symbols, and the UpPTS may include 1 or 2 symbols.

The symbol of DwPTS may include a DL data signal, and the symbol of UpPTS may include a UL RS and a random access preamble.

With 10 types of the SS configurations, it is available to vary the GP length in the SS in symbol units. As described above, with applying an appropriate SS configuration to the cell according to a propagation delay depending on the cell radius, it is available to set a GP having an appropriate time length depending on the propagation delay, for example.

The eNB3 sets a specific resource in the GP of the SS, and transmits and receives a CAL signal by using the resource. Thus, CAL signals can be multiplexed in the SS.

The SS for which resource for a CAL signal (may be referred to as "CAL resource") is set may be selected from, for example, the ten types of SS configuration illustrated in FIG. 9. For example, an SS configuration with a GP length sufficient to perform transmission and reception of a CAL signal may be selected.

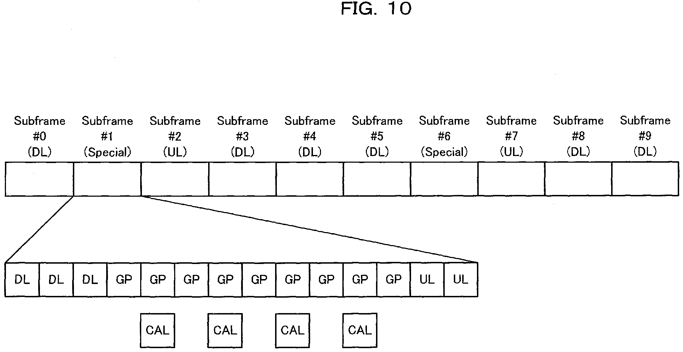

As a non-limiting example, the eNB3 may apply the SS configuration = "5" to the macrocell in FIG. 9 and may set all or a part of the 9 symbols of the GP with symbol numbers = 3 to 11 as the CAL resources (for example, see FIG. 10).

Such setting enables the RF circuit calibration using the CAL resources while avoiding collision between the UL signal and the DL signal in normal cellular communication in the macrocell.

The eNB3 may transmit information related to a timing of applying a selected SS configuration to the macrocell (may be referred to as "timing information" for descriptive purposes) to the UE 5 to notify. In the eNB3, the timing of applying the SS configuration to the macrocell may be periodic or aperiodic.

The UE5 that receives the timing information from the eNB3 can recognize which SS configuration is applied at the timing of which SS in the radio frame. Different SS configurations to be applied may have different GP lengths in the SS. Therefore, the UE5 can recognize the timing at which the SS of different GP length is applied based on the timing information.

The UE5 may control communication with the eNB3 so as not to perform the UL and DL communication in the GP of the SS configuration recognized based on the timing information.

For example, at the timing of selective application of the first SS configuration having the first GP length, the UE5 may wait for UL and DL communications for a time corresponding to the first GP length.

Further, at the timing of selective application of the second SS configuration having the second GP length shorter than the first GP length, the UE5 may wait for UL and DL communications for a time corresponding to the second GP length shorter than the first GP length.

The GP with the first GP length is an example of the first GP in the first SS to which the first SS configuration is applied, and the GP with the second GP length is an example of the second GP in the second SS to which the second SS configuration is applied.

Thus, a waiting (or standby) time of communications by the UE5 is changed depending on a change of the SS configurations applied by the eNB3.

The eNB3 may set CAL resources to the GP of the first GP length in the first SS configuration. Thus, transmission and reception of the CAL signal is performed in the SS where a communication standby time of the UE5 becomes longer.

At a timing of selective application of the second SS configuration, a communication standby time of the UE5 is shorter than the timing of selective application of the first SS configuration. Therefore, it is possible to suppress a waste of time resources due to a fixed application of the first SS configuration for transmission and reception of the CAL signal.

In other words, the eNB3 adaptively changes the SS configuration to be applied depending on a necessity of setting of CAL resources and notifies the UE5 of the information related to the timing of selective application, whereby the eNB3 can optimize the communication standby time of the UE5. Therefore, it is possible to minimize the consumption of wireless resources for RF circuit calibration.

(Configuration Example of eNB3)

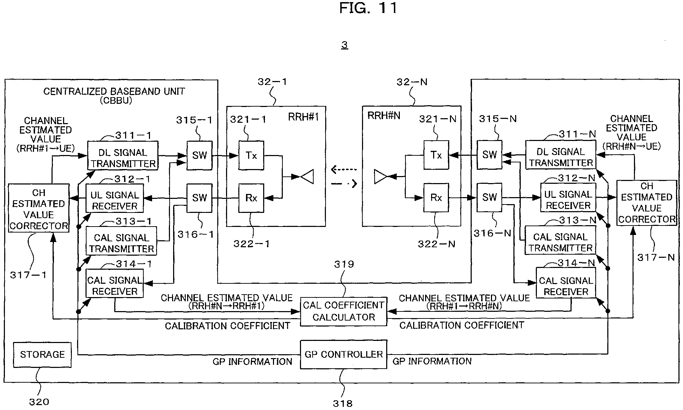

FIG. 11 illustrates a configuration example of the eNB3. As illustrated in FIG. 11, the eNB3 may include a centralized base band unit (CBBU) 31, and N wireless devices (for example, RRH) 32-1 to 32-N (#1 to #N).

The CBBU 31 and RRH 32-i (i is any one of 1 to N) may be connected with each other by using an optical fiber. For example, CPRI may be applied to the connection using optical fibers. The "CPRI" is an abbreviation of "common public radio interface".

The RRH32-i may include an RF transmission circuit (Tx) 321-i, an RF reception circuit (Rx) 322-i, and an antenna 323-i.

The RF transmission circuit 321-i may up-convert the transmission baseband signal received from the CBBU 31 to an RF signal to output to the antenna 323-i. The transmission RF signal may be amplified to the target transmission power, for example, by a high power amplifier (HPA).

The RF reception circuit 322-i may down-convert the RF signal received by the antenna 323-i to a baseband signal to output to the CBBU 31. The reception RF signal may be appropriately amplified, for example, by a low noise amplifier (LNA).

Since one antenna 323-i is provided for each of the N RRHs 32-1 to 32-N, the number of antennas is also N. Therefore, the target of the RF circuit calibration in the eNB3 is the (N-1) pairs of antenna pairs as schematically illustrated in FIG. 6.

In FIG. 11, as a representative example, a pair of the antenna 321-1 of the RRH 32-1 and the antenna 321-N of the RRH 32-N is illustrated, and illustrations of the other antenna pairs are omitted.

The CBBU 31 may include a DL signal transmitter 311-i, a UL signal receiver 312-i, a CAL signal transmitter 313-i, a CAL signal receiver 314-i, switches (SW) 315-i and 316-i, and a channel (CH) estimated value corrector 317-i. Each of these units may be provided with only N sets corresponding to the number N of the RRHs 32-i. Further, the CBBU 31 may include a GP controller 318, a calibration coefficient calculator 319, and the storage 320.

The DL signal transmitter 311-i may perform the transmission processing on the DL signal to be transmitted to the UE5 through the RRH 32-i to output to the switch 315-i. The transmission processing of the DL signal may include encoding and modulation of the transmission signal and weighting control for precoding transmission and beamforming transmission.

The UL signal receiver 312-i may perform the reception processing on the UL signal received by the RRH 32-i to be input from the switch 316-i. The reception processing of the UL signal may include demodulation and decoding of the UL signal. Further, the reception processing of the UL signal may include channel estimation processing using a UL RS.

The CAL signal transmitter 313-i may generate a CAL signal to be transmitted from the RRH 32-i to another RRH 32-j so as to output to the switch 315-i. Here, j is an integer that satisfies any one of 1 to N and $j \neq i$. The CAL signal transmitter 313-i is an example of a transmitter that transmits a CAL signal being an example of a predetermined signal in the GP of the first SS out of the first and second SSs.

The CAL signal receiver 314-i may receive the CAL signal received by the RRH 32-i to be input from the switch 316-i so as to process. The reception processing of the CAL signal may include the processing of obtaining a channel estimated value between the RRH 32-i and another RRH 32-j being the source of the CAL signal based on the received CAL signal. The obtained channel estimated value may be given to the CAL coefficient calculator 319 for the calculation of the calibration coefficient.

The switch 315-i may selectively output any one of the signal input from the DL signal transmitter 311-i and the CAL signal input from the CAL signal transmitter 313-i to the RF transmission circuit 321-i of the RRH 32-i.

The switch 316-i may selectively output the signal input from the RF reception circuit 322-i of the RRH 32-i to any one of the UL signal receiver 312-i and the CAL signal receiver 314-i.

The output switching between the switches 315-i and 316-i may be controlled by the GP controller 318.

The channel estimated value corrector 317-i may correct a UL channel estimated value calculated by the UL signal receiver 312-i by the calibration coefficient calculated by the CAL coefficient calculator 319.

The corrected UL channel estimated value may be considered as being equivalent to a DL channel estimated value, and may be given to the DL signal transmitter 311-i and may be used for a weighting control for precoding transmission and beamforming transmission.

The GP controller 318 may selectively apply the SS configuration with the first GP length and the SS configuration with the second GP length in the TDD with the UE5. In other words, the GP controller 318 selectively applies the first SS with the first GP and the second SS with the second GP.

Further, the GP controller 318 may generate information related to the timing of selective application of one or both of the first and second SS configurations. For example, the GP controller 318 may generate one or both of the timing information for applying the SS configuration with the first GP length and the timing information for applying the SS configuration with the second GP length.

The first GP length may be longer than the second GP length. The GP controller 318 may set CAL resources to the first GP with long GP length.

For descriptive purposes, the timing information may be referred to as GP information or GP control information, and may be information indicative of a time period in a radio frame. The time period may be distinguished in slot units or may be distinguished in subframe units.

For example, the timing information to apply the SS configuration with the first GP length may be information indicative of the timing of the SS corresponding to the first time period. The timing information for applying the SS configuration with the second GP length may be information indicating the timing of the SS corresponding to the second time period.

Based on the GP control information, the transmission timing or the reception timing of the DL signal transmitter 311-i, the UL signal receiver 312-i, the CAL signal transmitter 313-i, and the CAL signal receiver 314-i may be controlled.

The DL signal transmitter 311-i, the UL signal receiver 312-i, the CAL signal transmitter 313-i, and the CAL signal receiver 314-i may be considered as elements of the communication circuitry. The DL signal transmitter 311-i may be considered as an example of a communication circuitry to notify the UE5 of information related to the timing of selective application of the first and second SSs.

The timing information for notifying the UE5 may be one or both of the timing information of the first SS and the timing information of the second SS. When the UE5 is notified of at least one of the timing information of the first SS and the timing information of the second SS, the UE5 can identify the other timing information based on the periodicity in the time axis of the TDD frame.

The CAL coefficient calculator 319 may calculate a calibration coefficient by comparing bidirectional channel estimated values estimated based on CAL signals transmitted and received between a pair of different RRH 32-i and RRH 32-j.

As a representative example, FIG. 11 illustrates that bidirectional channel estimated values between RRH 32-1 and RRH 32-N can be obtained. Although not illustrated in FIG. 11, bidirectional channel estimated values are obtained for each of the (N-1) sets of RRH pairs. The obtained calibration coefficient may be given to the channel estimated value corrector 317-i.

The channel estimated value corrector 317-i and the CAL coefficient calculator 319 may be considered as an example of a calibrator for calibrating the channel characteristics between antennas forming pairs in the eNB3 with the CAL signal.

The storage 320 may store the data of each configuration illustrated in FIGS. 8 and 9. The GP controller 318 may determine the UL-DL configuration and the SS configuration to be applied based on the configuration data stored in the storage 320.

The channel estimated value related to the calculation of the CAL coefficient by the CAL coefficient calculator 319 and the calculated calibration coefficient may be stored in the storage 320. Further, programs and data for achieving the operation of the eNB3 may be stored in the storage 320.

Semiconductor memories such as a RAM (random access memory) and a ROM (read only memory), a hard disk drive (HDD), a solid-state drive (SSD), and the like may be applied to the storage 320.

The above-described transmitters 311-i and 313-i, receivers 312-i and 314-i, the CH estimated value corrector 317-i, the GP controller 318, and all or part of the CAL coefficient calculator 319 may be achieved by using a hardware circuit having arithmetic processing capability.

An example of a hardware circuit having arithmetic processing capability is a CPU (central processing unit), a DSP (digital signal processor), an MPU (micro processing unit), an IC (integrated circuit), an FPGA (field-programmable gate array), and the like. The hardware circuit having arithmetic processing capability may be referred to as "computer".

Various functions of the eNB3 may be embodied by the computer reading the program (may be referred to as "software" or "application") and data stored in the storage 320 to operate.

The program and data may be provided in a form recorded on a computer readable recording medium such as a flexible disk, a CD-ROM, a CD-R, a CD-RW, an MO, a DVD, a Blu-ray disk, a portable hard disk, a USB memory, or the like. Further, the program and data may be provided (for example, downloaded) from the server or the like to the eNB3 through a communication line.

(Configuration Example of UE5)

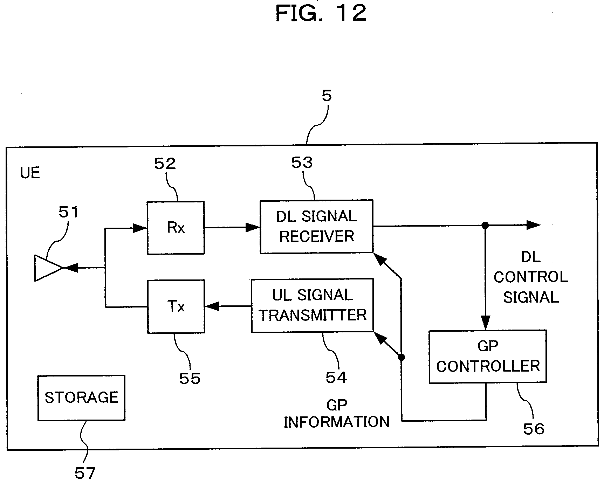

Next, a configuration example of the UE5 will be described with reference to FIG. 12.

As illustrated in FIG. 12, the UE5 may include an antenna 51, an RF reception circuit (Rx) 52, a DL signal receiver 53, a UL signal transmitter 54, an RF transmission circuit (Tx) 55, a GP controller 56, and storage 57.

The antenna 51 receives the RF signal of the DL transmitted by the eNB3 and transmits the RF signal of the UL addressed to the eNB3.

The RF reception circuit 52 may down-converts the RF signal of the DL received by the antenna 51 into a baseband signal to perform reception processing. The reception RF signal may be appropriately amplified by, for example, an LNA.

The DL signal receiver 53 performs reception processing on the reception baseband signal of the DL input from the RF reception circuit 52. The reception processing of the DL may include demodulation and decoding of the DL signal and channel estimation of the DL.

The channel estimation of the DL may be performed based on, for example, the DL RS or the pilot signal. Further, the demodulation and decoding result of the DL signal may include the control signal of the DL. The above-described GP control information may be included in the control signal of the DL. Therefore, the DL signal receiver 53 is an example of a receiver that receives information related to the timing of selective application of the first and second SSs selectively applied by the eNB3.

The UL signal transmitter 54 may perform transmission processing of the UL signal to be transmitted to the eNB3. The UL signal may include the RS of the UL and pilot signals. Further, the transmission processing of the UL signal may include coding and modulation of the UL signal.

The RF transmission circuit 55 may up-convert the UL signal input from the UL signal transmitter 54 to an RF signal to output to the antenna 51. The transmission RF signal may be amplified to the target transmission power, for example, by the HPA.

The GP controller 56 may extract the GP control information from the control signal of the DL obtained by the reception processing of the DL signal receiver 53. The reception timing or transmission timing of the DL signal receiver 53 and the UL signal transmitter 54 may be controlled by the GP controller 56 based on the GP control information.

For example, the GP controller 56 may control the DL signal receiver 53 and the UL signal transmitter 54 so as to perform UL transmission or DL reception in the time slot other than the GP of the first SS and the GP of the second SS identified based on the GP control information.

Therefore, the DL signal receiver 53 and the UL signal transmitter 54 may be considered as an example of a communication circuitry that performs UL transmission or DL reception in the time slot other than the GP of the first SS and the GP of the second SS identified based on the GP control information.

The storage 57 may store the data of each configuration illustrated in FIGS. 8 and 9. The GP controller 56 can specify and identify the information related to the timing of selective application of the first and second SSs by referring to the configuration data stored in the storage 57, for example, based on the GP control information received from the eNB3.

The GP control information received from the eNB may be stored in the storage 57. Further, programs and data for achieving the operation of the UE5 may be stored in the storage 57.

Semiconductor memories such as a RAM and a ROM, an HDD, an SSD, and the like may be applied to the storage 57.

The above-described DL signal receiver 53, UL signal transmitter 54, and all or a part of the GP controller 56 may be achieved by using a hardware circuit having arithmetic processing capability. An example of the hardware circuit having arithmetic processing capability is a CPU, a DSP, an MPU, an IC, an FPGA, or the like. The hardware circuit having arithmetic processing capability may be referred to as "computer".

Various functions of the UE5 may be embodied by the computer reading the program and data stored in the storage 57 to operate.

The program and data may be provided in a form recorded on a computer readable recording medium such as a flexible disk, a CD-ROM, a CD-R, a CD-RW, an MO, a DVD, a Blu-ray disk, a portable hard disk, a USB memory, or the like. Further, the program and data may be provided (for example, downloaded) from the server or the like to the UE5 through a communication line.

(Operation Example)

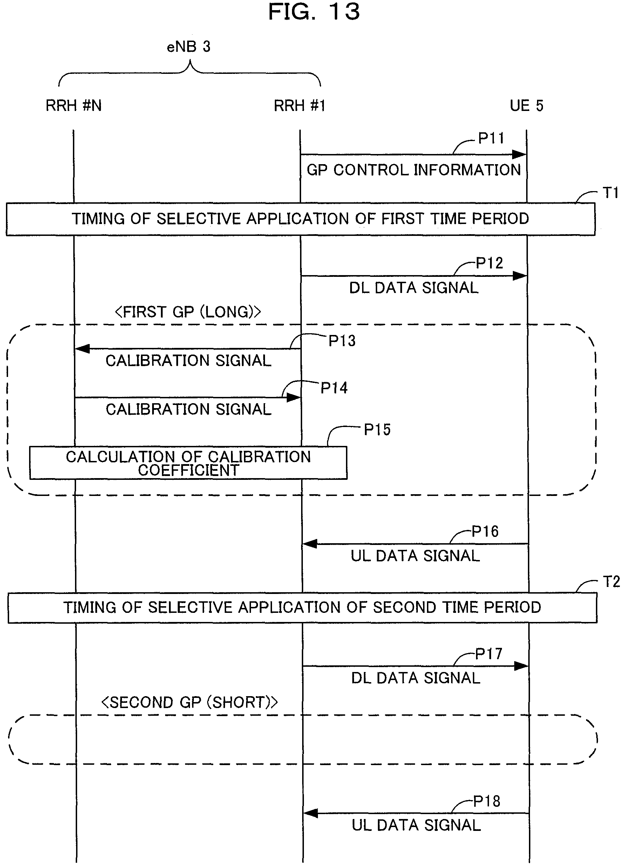

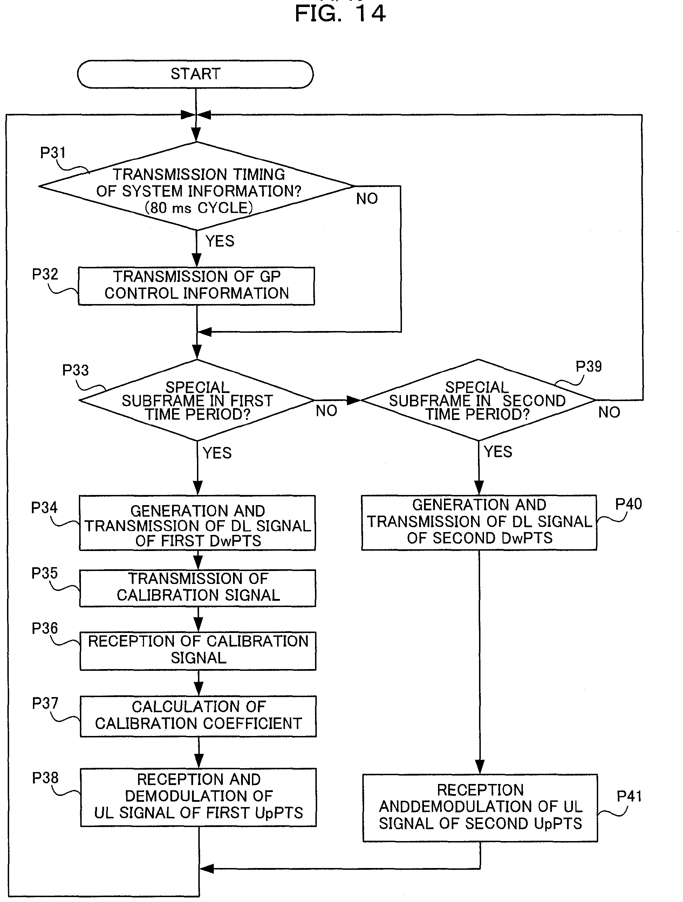

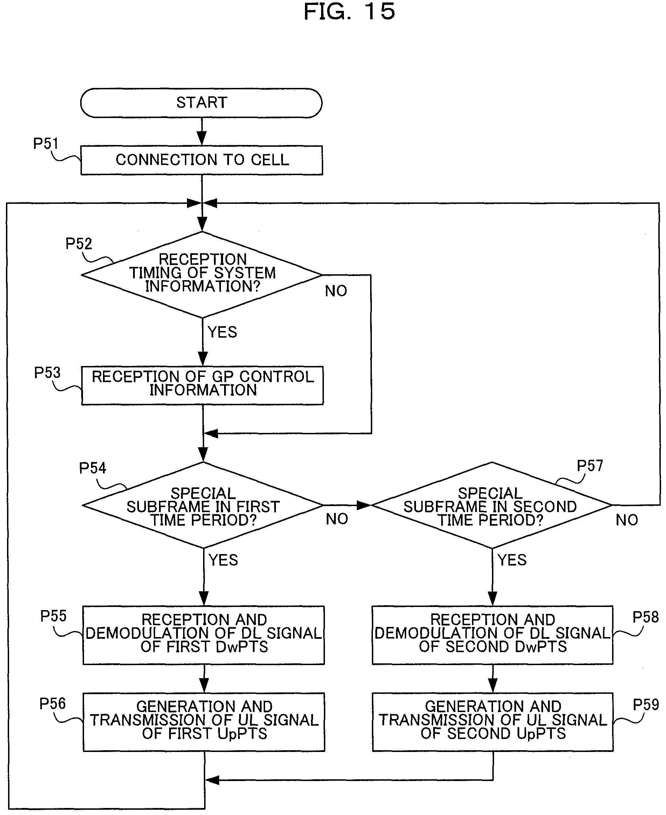

In the following, an operation example including the RF circuit calibration in the above-described wireless communication system 1 will be described with reference to FIGS. 13 to 15. FIG. 13 is a sequence diagram illustrating an operation example of the wireless communication system 1, FIG. 14 is a flowchart illustrating an operation example of the eNB3, and FIG. 15 is a flowchart illustrating an operation example of the UE5.

As illustrated in FIG. 13, the eNB3 transmits the GP control information to the UE5 to notify (process P11). As one non-limiting example, the GP control information may be transmitted to the UE5 at the timing of transmitting the system information.

For example, as illustrated in FIG. 14, the eNB3 monitors whether or not the transmission timing of the system information (for example, 80 ms cycle) has arrived (process P31).

When the transmission timing of the system information arrives (YES in process P31), the eNB3 generates GP control information, for example, by the GP controller 318 to transmit to the UE5 (process P32). The GP control information may be included in a DL control signal peculiar to the UE5 connected to any one of the RRH 32-i.

When the transmission timing of the system information has not arrived (NO in process P31), the eNB3 may shift the process to process P33 to be described below without performing the transmission processing of the GP control information.

The GP control information may be included in a report signal to be reported to the wireless area provided by the RRH 32-i. Further, the GP control information may be transmitted from any of RRH 32-i. The GP control information may be transmitted from two or more of RRHs 32-i. FIG. 13 illustrates an example in which the GP control information is transmitted from the RRH 32-1 as one non-limiting example.

The UE5 can recognize the timing of selective application T1 of the first SS corresponding to the first time period and the timing of selective application T2 of the second SS corresponding to the second time period by receiving the GP control information.

For example, the GP length in the first SS may be longer than the GP length in the second SS corresponding to the second time period.

In the first SS, the occupation ratio of the GP may be larger than that of the (first) DwPTS or the (first) UpPTS. In the second SS, the occupation ratio of the GP may be smaller than that of the (second) DwPTS or the (second) UpPTS.

As a non-limiting example, the first SS may be a configuration of the SS configuration number "0" or "5" and the second SS may be a configuration of any one of the SS configuration numbers "1" to "4" and "6" to "9" illustrated in FIG. 9.

For example, as illustrated in FIG. 15, the UE5 connects to the eNB3 (process P51), and then monitors whether or not the reception timing of the system information from the eNB3 has arrived (process P52).

When the reception timing of the system information arrives (YES in process P52), the UE5 controls the reception processing of the DL signal receiver 53, for example, by the GP controller 56 to receive the control signal of the DL, whereby receives the GP control information included in the control signal of the DL (process P53).

When the reception timing of the system information has not arrived (NO in process P52), the UE5 may shift the process to process P54 to be described below without performing the reception processing of the GP control information.

As illustrated in FIG. 14, the eNB3 monitors whether or not the timing of selective application of the first time period has arrived (process P33).

When the timing of selective application of the first time period arrives (YES in process P33), the eNB3 may generate and transmit the DL signal in the DwPTS in the SS corresponding to the first time period (process P34, process P12 in FIG. 13).

Taking SS configuration = "5" illustrated in FIG. 9 as an example, the DL signal may be transmitted in three symbols of time slots of symbol numbers "0" to "2" indicated by "D". The DL signal may be a data signal.

Thereafter, in the GP of the SS corresponding to the first time period, the CAL signal is transmitted and received to and from another RRH 32-j (for example, j = N), and the calibration coefficient may be calculated (processes P35 to P37, processes P13 to P15 in FIG. 13). The transmission and reception of the CAL signal and the calculation of the calibration coefficient may be repeated as many times as the number of antenna pairs subject to the RF circuit calibration.

After calculating the calibration coefficient, the eNB3 may receive and demodulate the UL signal transmitted by the UE5 in the first UpPTS in the SS corresponding to the first time period (process P38, process P16 in FIG. 13).

Taking SS configuration = "5" illustrated in FIG. 9 as an example, the UL signal may be transmitted by the UE5 in two symbols of time slots of symbol numbers "12" and "13" indicated by "U".

Thereafter, the eNB3 may shift the process to process P31. When the timing of selective application of the first time period has not arrived (NO) in process P33 in FIG. 14, the eNB3 may monitor whether or not the timing of selective application of the second time period has arrived (process P39).

When the timing of selective application of the second time period arrives (YES in process P39), the eNB3 may generate and transmit the DL signal in the DwPTS in the SS corresponding to the second time period (process P40, process P17 in FIG. 13). Further, the eNB3 may receive and demodulate the UL signal transmitted by the UE5 in the UpPTS in the SS corresponding to the second time period (process P41, process P18 in FIG. 13).

Thereafter, the eNB3 may shift the process to process P31. In process P39 in FIG. 14, even when the timing of selective application of the second time period has not arrived, the eNB3 may shift the process to process P31.

On the other hand, focusing on the operation example of the UE5 after receiving the GP control information from the eNB3, as illustrated in FIG. 15, the UE5 monitors whether or not the timing of selective application of the first time period recognized by the GP control information has arrived (process P54).

When the timing of selective application of the first time period arrives (YES in process P54), the UE5 may receive and demodulate the DL signal in the DwPTS of the SS corresponding to the first time period (process P55, process P12 in FIG. 13).

Further, the UE5 may generate and transmit the UL signal in the UpPTS of the SS corresponding to the first time period (process P56, process P16 in FIG. 13). Thereafter, the UE5 may shift the process to process P51. When the timing of selective application of the first time period has not arrived (NO) in process P54, the UE5 may monitor whether or not the timing of selective application of the second time period has arrived (process P57).

When the timing of selective application of the second time period arrives (YES in process P57), the UE5 may receive and demodulate the DL signal in the DwPTS in the SS corresponding to the second time period (process P58, process P17 in FIG. 13).

Further, the UE5 may generate and transmit the UL signal in the UpPTS of the SS corresponding to the second time period (process P59, process P18 in FIG. 13). Thereafter, the UE5 may shift the process to process P51. In process P57, even when the timing of selective application of the second time period has not arrived, the UE5 may shift the process to process P51.

In short, the UE5 may perform UL transmission or DL reception in the time slot other than the GP of the first SS and the GP of the second SS identified based on the timing information received from the eNB3.

As described above, according to the above-described example, in the wireless communication system 1 of TDD, it is possible to achieve compatibility between the transmission of a predetermined signal such as the CAL signal by the base station 3 and the suppression of the decrease in the utilization efficiency of the wireless resources. For example, it is possible to transmit and receive CAL signals for large-scale antenna systems while minimizing the consumption of resources for ordinary cellular communications.

(Others)

Although in the above-described example, the CAL signal for the RF circuit calibration is cited as an example of the predetermined signal transmitted by the base station 3 in the GP, the CAL signal may be a signal for other purposes. The signal for other purposes may be a signal that is not directed for the termina

For example, the predetermined signal may be a signal for measuring some physical variations between RRHs and making corrections in addition to calibration. For example, it is conceivable to measure and correct the variations of the carrier frequency caused by the local oscillator for each RRH.

For example, as with the calibration, a pair of RRHs (for example, RRHs #1 and #2) are formed, and a predetermined signal is transmitted from RRH #1 to RRH #2 twice at certain nearby timings (for example, time difference $\Delta T$). The RRH #2 can estimate the frequency difference between the RRH #1 and the RRH #2 by performing channel estimation by using the respective reception signals to check the phase change between the channel estimated values in $\Delta T$.

According to the above-described technology, the compatibility between the transmission of the predetermined signal by the base station and the suppression of reduction in the utilization efficiency of the wireless resources can be achieved in the wireless communication system of time-division duplex communication.

## Claims

1.   A base station (3) comprising:

   a plurality of antennas (321-1 to 321-N);
   a controller (318) configured to selectively apply one of a first time period having a first guard period and a second time period having a second guard period, wherein the first guard period is longer than the second guard period, to time-division duplex communication with a terminal (5);
   a communication circuitry (313-1 to 313-N) configured to:

   notify the terminal of information related to a timing of selectively applying one of the first time period and the second time period,
   generate a test signal which is transmitted between any one or more of pairs of the plurality of antennas (321-1 to 321-N), and
   transmit the test signal in the first guard period when the first time period is applied; and

   a calibrator (319-1 to 319-N, 317-1 to 317-N) configured to calibrate channel characteristics between the pair of antennas by using the test signal.

2.   The base station according to claim 1, wherein the communication circuitry (313-1 to 313-N) is further configured to communicate with the terminal (5) in a time period other than the first and second guard periods.

## Patentansprüche

1.   Basisstation (3), umfassend:

   mehrere Antennen (321-1 bis 321-N);
   ein Steuergerät (318), das zum selektiven Anwenden einer ersten Zeitdauer mit einem ersten Wachzeitraum und einer zweiten Zeitdauer mit einem zweiten Wachzeitraum, wobei der erste Wachzeitraum länger ist als der zweite Wachzeitraum, auf eine Zeitteilungs-Duplexkommunikation mit einem Endgerät (5);
   Kommunikationsschaltung (313-1 bis 313-N), die gestaltet ist, um:

   das Endgerät über die Informationen bezüglich einer Zeitvorgabe zum selektiven Anwenden von einer der ersten Zeitdauer und der zweiten Zeitdauer zu informieren,
   ein Testsignal zu erzeugen, das zwischen irgendeinem oder mehreren Paaren der mehreren Antennen (321-1 bis 321-N) übertragen ist, und
   Übertragen des Testsignals in dem ersten Wachzeitraum, wenn der erste Zeitraum angewendet ist; und

einen Kalibrator (319-1 bis 319-N, 317-1 bis 317-N), der zum Kalibrieren von Kanalmerkmalen zwischen dem Antennenpaar durch Verwenden des Testsignals gestaltet ist.

**2.** Basisstation nach Anspruch 1, wobei die Kommunikationsschaltung (313-1 bis 313-N) ferner gestaltet ist, um mit dem Endgerät (5) in einem Zeitraum zu kommunizieren, der nicht der erste und zweite Zeitraum ist.

**Revendications**

**1.** Station de base (3) comprenant :

une pluralité d'antennes (321-1 à 321-N) ;
un dispositif de commande (318) configuré pour appliquer sélectivement l'une d'une première période de temps ayant une première période de garde et d'une seconde période de temps ayant une seconde période de garde, dans laquelle la première période de garde est plus longue que la seconde période de garde, à une communication duplex à répartition dans le temps avec un terminal (5) ;
des circuits de communication (313-1 à 313-N) configuré pour :

notifier au terminal des informations relatives à un cadencement d'application de manière sélective de l'une de la première période de temps et de la seconde période de temps,
générer un signal de test qui est transmis entre une quelconque ou plusieurs paires de la pluralité d'antennes (321-1 à 321-N), et
transmettre le signal de test dans la première période de garde lorsque la première période de temps est appliquée ; et
un calibrateur (319-1 à 319-N, 317-1 à 317-N) configuré pour calibrer des caractéristiques de canal entre la paire d'antennes à l'aide du signal de test.

**2.** Station de base selon la revendication 1, dans laquelle les circuits de communication (313-1 à 313-N) sont en outre configurés pour communiquer avec le terminal (5) dans une période de temps autre que les première et seconde périodes de garde.

FIG. 1

# FIG. 2

FIG. 3

FIG. 4

# FIG. 5

<u>3</u>

# FIG. 6

NUMBER OF CALIBRATION SIGNALS DEPENDING
ON NUMBER OF ANTENNAS

eNB

3

FIG. 7

(2) ANT#2:  DL SIGNAL | DL SIGNAL | GAP#1 | CAL#1 | GAP#2 | CAL#2 | GAP#3 | UL SIGNAL | UL SIGNAL → TIME

DwPTS | Guard period (GP) | UpPTS

(1) ANT#1:  DL SIGNAL | DL SIGNAL | CAL#1 | GAP#4 | CAL#2 | UL SIGNAL | UL SIGNAL → TIME

PROPAGATION DELAY

(3) UE 5:  DL SIGNAL | DL SIGNAL | GAP#5 | UL SIGNAL | UL SIGNAL → TIME

PROPAGATION DELAY

OFDM SYMBOL

GAP IN CONSIDERATION OF PROPAGATION DELAY
AND SWITCHING TIME BETWEEN TRANSMISSION AND
RECEPTION PROCESSING IN DEVICE MAY BE NEEDED

FIG. 8

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

## FIG. 9

| SS conf. | OFDM symbol (special sub-frame) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | G | G | G | G | G | G | G | G | G | G | U |
| 1 | D | D | D | D | D | D | D | D | D | G | G | G | G | U |
| 2 | D | D | D | D | D | D | D | D | D | D | G | G | G | U |
| 3 | D | D | D | D | D | D | D | D | D | D | D | G | G | U |
| 4 | D | D | D | D | D | D | D | D | D | D | D | D | G | U |
| 5 | D | D | D | G | G | G | G | G | G | G | G | G | U | U |
| 6 | D | D | D | D | D | D | D | D | D | G | G | G | U | U |
| 7 | D | D | D | D | D | D | D | D | D | D | G | G | U | U |
| 8 | D | D | D | D | D | D | D | D | D | D | D | G | U | U |
| 9 | D | D | D | D | D | D | G | G | G | G | G | G | U | U |

FIG. 10

| Subframe #0 (DL) | Subframe #1 (Special) | Subframe #2 (UL) | Subframe #3 (DL) | Subframe #4 (DL) | Subframe #5 (DL) | Subframe #6 (Special) | Subframe #7 (UL) | Subframe #8 (DL) | Subframe #9 (DL) |
| --- | --- | --- | --- | --- | --- | --- | --- | --- | --- |
|  |  |  |  |  |  |  |  |  |  |

| DL | DL | DL | GP | GP | GP | GP | GP | GP | GP | GP | GP | UL | UL |
| --- | --- | --- | --- | --- | --- | --- | --- | --- | --- | --- | --- | --- | --- |

| CAL | | CAL | | CAL | | CAL |

FIG. 11

3

# FIG. 12

# FIG. 13

## FIG. 14

```
                    ┌──────────────────┐
                    │      START       │
                    └──────────────────┘
                              │
    P31                       ▼
         ╱────────────────────────────────────╲
        ╱    TRANSMISSION TIMING                ╲         NO
        ╲    OF SYSTEM INFORMATION?             ╱─────────────┐
         ╲   (80 ms CYCLE)                     ╱              │
           ╲────────────────────────────────╱                │
                         │ YES                                │
    P32                  ▼                                    │
         ┌──────────────────────────────┐                    │
         │    TRANSMISSION OF GP         │                    │
         │    CONTROL INFORMATION        │                    │
         └──────────────────────────────┘                    │
                         │                                    │
                         ▼                                    │
    P33                                      P39              │
        ╱──────────────────╲          ╱──────────────────╲   │
       ╱   SPECIAL           ╲   NO   ╱  SPECIAL           ╲  │ NO
       ╲   SUBFRAME IN FIRST ╱───────▶╲ SUBFRAME IN SECOND ╱──┘
        ╲  TIME PERIOD?     ╱          ╲ TIME PERIOD?     ╱
          ╲───────────────╱             ╲───────────────╱
                │ YES                          │ YES
    P34         ▼                              ▼              P40
     ┌──────────────────────┐      ┌──────────────────────┐
     │ GENERATION AND        │      │ GENERATION AND        │
     │ TRANSMISSION OF DL     │      │ TRANSMISSION OF DL     │
     │ SIGNAL OF FIRST DwPTS  │      │ SIGNAL OF SECOND DwPTS │
     └──────────────────────┘      └──────────────────────┘
    P35         │                              │
                ▼                              │
     ┌──────────────────────┐                 │
     │ TRANSMISSION OF        │                │
     │ CALIBRATION SIGNAL     │                │
     └──────────────────────┘                 │
    P36         │                              │
                ▼                              │
     ┌──────────────────────┐                 │
     │ RECEPTION OF CALIBRATION│                │
     │ SIGNAL                  │                │
     └──────────────────────┘                 │
    P37         │                              │
                ▼                              │
     ┌──────────────────────┐                 │
     │ CALCULATION OF         │                │
     │ CALIBRATION COEFFICIENT│                │
     └──────────────────────┘                 │
    P38         │                              ▼              P41
                ▼                   ┌──────────────────────┐
     ┌──────────────────────┐      │ RECEPTION              │
     │ RECEPTION AND          │      │ ANDDEMODULATION OF UL  │
     │ DEMODULATION OF        │      │ SIGNAL OF SECOND UpPTS │
     │ UL SIGNAL OF FIRST UpPTS│      └──────────────────────┘
     └──────────────────────┘                 │
                │                              │
                ▼◀─────────────────────────────┘
```

FIG. 15

```
                    ┌─────────────────────┐
                    │        START        │
                    └─────────────────────┘
                               │
                               ▼
P51   ┌──────────────────────────────────────┐
      │          CONNECTION TO CELL           │
      └──────────────────────────────────────┘
                               │
              ┌────────────────┼──────────────────────────────────┐
              │                ▼                                   │
              │          ╱─────────────╲                          │
P52           │         ╱   RECEPTION    ╲                        │
              │        ╱ TIMING OF SYSTEM  ╲        NO             │
              │        ╲   INFORMATION?    ╱────────────┐         │
              │         ╲                 ╱             │         │
              │          ╲───────────────╱              │         │
              │                 │ YES                   │         │
              │                 ▼                       │         │
P53           │      ┌───────────────────────┐          │         │
              │      │ RECEPTION OF GP CONTROL│          │         │
              │      │      INFORMATION       │          │         │
              │      └───────────────────────┘          │         │
              │                 │◄───────────────────────┘         │
              │                 ▼                                  │
P54           │          ╱─────────────╲          P57             │
              │         ╱   SPECIAL       ╲       ╱────────────╲   │
              │        ╱ SUBFRAME IN FIRST ╲  NO ╱  SPECIAL      ╲ │  NO
              │        ╲   TIME PERIOD?    ╱────►╲ SUBFRAME IN SECOND╲─┘
              │         ╲                 ╱      ╲   TIME PERIOD?  ╱
              │          ╲───────────────╱        ╲──────────────╱
              │                 │ YES                    │ YES
              │                 ▼                        ▼
P55  ┌──────────────────────┐        ┌──────────────────────┐  P58
     │ RECEPTION AND        │        │ RECEPTION AND        │
     │ DEMODULATION OF DL   │        │ DEMODULATION OF DL   │
     │ SIGNAL OF FIRST DwPTS│        │ SIGNAL OF SECOND DwPTS│
     └──────────────────────┘        └──────────────────────┘
                 │                              │
                 ▼                              ▼
P56  ┌──────────────────────┐        ┌──────────────────────┐  P59
     │ GENERATION AND       │        │ GENERATION AND       │
     │ TRANSMISSION OF UL   │        │ TRANSMISSION OF UL   │
     │ SIGNAL OF FIRST UpPTS│        │ SIGNAL OF SECOND UpPTS│
     └──────────────────────┘        └──────────────────────┘
                 │                              │
                 └──────────────◄──────────────┘
```

REFERENCES CITED IN THE DESCRIPTION

**Patent documents cited in the description**

- JP 2013074486 A
- WO 2015108007 A
- JP 2010041269 A
- JP 2006512807 W
- US 2013286902 A1

- EP 2416507 A1
- WO 2010147515 A1
- US 2006009162 A1
- US 2014198773 A1

**Non-patent literature cited in the description**

- 3GPP RI-094641, ''Performance study on Tx/Rx mismatch in LTE TDD Dual-layer beamforming. *3GPP TSG-RAN WG1 Meeting #59,* 09 November 2009